# EUROPEAN PATENT APPLICATION

(11) **EP 0 969 361 A1**
(43) Date of publication of application: **05.01.2000**
(21) Application number: 99202071.9
(22) Date of filing: 26.06.1999
(51) Int. Cl.: G06F 9/445, G06F 9/46

(54) **Class loader**

(30) Priority: 30.06.1998 US 107915
(71) Applicant: SUN MICROSYSTEMS, INC., Palo Alto, California 94303 (US)
(72) Inventor: Guinan, Daniel J., San Mateo, CA 94403 (US); Hart, Loren L., San Jose, CA 95136 (US)
(74) Representative: Hanna, Peter William Derek

(57) **Abstract**

A class loader (**206, 208, 210, 212, 214**) is provided for automatically accessing classes across a namespace boundary (**206a, 208a, 210a, 212a, 214a**) without requiring the accessed classes to be public. A first cassette (**108**), comprising a first collection of classes (**108a, 108b**), is dependent upon a second cassette (**106**). Classes from within the first cassette (**108**) are loaded by a first class loader (**208**) and classes from within the second cassette (**106**) are loaded by a second class loader (**206**). When a first reference (**302**) is made to an unloaded class from within the first cassette, the referenced class is searched (**304, 308**) for in the second, depending, cassette. If found, it is loaded (**310**) by the second class loader. Only if the referenced class if not found in the second cassette is it searched (**312,314**) for in the first cassette. If, however, the referenced class is protected "private" in the second cassette, it will not be accessible to the first cassette.

## Description

### BACKGROUND

The present invention is related to the field of computer systems. More particularly, a system and methods are provided for sharing program objects between inter-dependent collections of program code.

Class loaders are employed in the Java™ programming language to load program files defining a program's classes and interfaces. A Java Virtual Machine (JVM), which typically is implemented as a "virtual" computer (i.e., implemented in software) operating on a particular hardware platform to run Java programs, may include one or more class loaders. One Java program may, for example, call different class loaders to load class files from different locations (e.g., a web browser accessing multiple web sites/pages, an application program running from a local hard disk).

Each class loader has an associated namespace comprising the classes it has loaded. After a class loader loads a particular class into its namespace, when that class refers to another class the JVM requests the referenced class from the same class loader that loaded the referring class. Classes within a namespace must have unique names, but different class loaders working in separate namespaces may load classes of the same name.

Typically, classes loaded by one class loader cannot access those loaded by a different class loader (i.e., they cannot easily reference across namespace boundaries). This security feature prevents malicious code loaded by one class loader from interfering with classes used by another class loader. In general, only the application program that invoked the class loaders can override this security feature. When this security feature is over-ridden by a program's source code by constructing a class to be "public," for example, the class becomes widely accessible, perhaps beyond what the developer intended.

In one implementation of the Java language, two levels of class loaders are provided. A system class loader is provided as part of the implementation of the JVM for the hardware platform. The system class loader has access to all classes included in the Java API (Application Programmer's Interface). In this implementation, when an application program first references (e.g., tries to access) a particular class, the system class loader attempts to load it from its library of trusted classes. If it is unsuccessful, a secondary class loader loads the class (e.g., by downloading it from a network location). Later, when the loaded class (e.g., a method of the class) references a second class, the JVM requests the secondary class loader to load the second class because it loaded the first class. The secondary class loader initially passes the request to the system class loader. Only if the system class loader cannot load the second class is the secondary class loader called upon to satisfy the request.

In the implementation described above, the classes accessible to the system class loader are kept secure from foreign program code, thus protecting them from corruption. This scheme allows some control over access to classes (e.g., a class available to the secondary class loader cannot be loaded if it has the same name as a class offered by the system class loader). In particular, it prevents a class loaded by the secondary class loader from masquerading as a class loaded by the system class loader.

However, this implementation stops short of providing a particular possible benefit. In particular, this implementation prevents one class loader (e.g., the system class loader or a first instance of the secondary class loader) from easily accessing classes of another class loader (e.g., a second instance of the secondary class loader) even where there is a relationship between the classes or code in the associated namespaces. Where, for example, classes loaded by two different class loaders have some inter-dependency or cooperation, the classes within the one class loader's namespace cannot access classes within the other's namespace without specific action on the part of an application program.

### SUMMARY

A class loader architecture is provided that allows one class loader to seamlessly access class files loaded by another class loader, while also allowing selected classes to be kept private and thus protected from access across namespace boundaries. A first set of classes, known as a "cassette," is associated with a first class loader. A second cassette is associated with a second class loader. The second set of classes has a dependent relationship upon the first set of classes. This dependency is specified at the time the cassette is assembled and cryptographically validated. A dependency graph (e.g., in the form of a graph, list or table) is constructed for the second cassette, in order to identify the extent of dependencies from that cassette (e.g., the second cassette is dependent upon the first cassette). If the first cassette is dependent up on another cassette, that other cassette is included in the second cassette's dependency graph.

When a new class reference is made from within the second cassette, the class loader associated with the most remote, depending cassette (e.g., the first cassette) attempts to load the referenced class from the first set. If unsuccessful, the referenced class is searched for in the cassette next closest to the dependent cassette (i.e., the second cassette). When the referenced class is found, it is loaded by the class loader associated with the cassette in which found. If, however, the referenced class is marked "private," it will not be loaded from a depending cassette, thus adhering to standard program security schemes.

### BRIEF DESCRIPTION OF THE FIGURES

FIG. 1 is a block diagram of an illustrative program environment in accordance with an embodiment of the present invention.
FIG. 2 is a block diagram demonstrating the relationship between a dependent and multiple depending cassettes in the program environment of FIG. 1, in accordance with an embodiment of the present invention.

### DETAILED DESCRIPTION

The following description is presented to enable any person skilled in the art to make and use the invention, and is provided in the context of a particular application and its requirements. Various modifications to the disclosed embodiments will be readily apparent to those skilled in the art, and the general principles defined herein may be applied to other embodiments and applications without departing from the spirit and scope of the present invention. Thus, the present invention is not intended to be limited to the embodiments shown, but is to be accorded the widest scope consistent with the principles and features disclosed herein.

In one embodiment of the invention, a class loader is provided for a programming language, such as the Java programming language, that is capable of accessing program code across namespace boundaries without modifying an application program's source code. For example, the class loader can be the system class loader provided with a Java Virtual Machine (JVM) or a sub-class thereof. Alternatively, the class loader can be an instance of the abstract ClassLoader class.

A first collection of program code (e.g., class files), termed a "cassette," is associated with a first class loader and a second cassette is associated with a second class loader. A dependent relationship is established between the two cassettes, such that the second cassette is approved to access contents (e.g., classes) of the first. In other words, the second cassette is dependent upon the first.

A dependency list (e.g., in the form of a list, table or graph) is constructed to reveal the full extent of dependencies from a dependent cassette. The list includes all cassettes depending from the dependent cassette, as well as all cassettes depending from them, etc. Illustratively, the dependency list or graph is constructed as cassettes are installed within a program's development or run-time environment. It is stored in temporary data storage until all elements (e.g., cassettes or JAR files) of the program are assembled. Once the program starts running, the dependency graph is placed in memory for easy access. The various cassettes identified in a dependency graph may be considered to share a "merged namespace" in which classes and/or packages are shared.

When a class loaded from the second cassette requests instantiation of a new class, the dependency list is followed to find the most remote depending cassette (i.e., the first cassette in this example). The class loader of that depending cassette attempts to load the referenced class from the depending cassette. If, however, the requested object is not contained within the depending cassette, the second class loader attempts to find the class within the second cassette.

In the presently described embodiment of the invention, dependencies are established at the time each cassette is signed. Cassettes are digitally signed with a cryptographic key to assure their validity. A class loader accessing classes from a signed cassette may validate the cassette by authenticating the digital signature in a standard manner. Once a cassette is signed, neither it nor its dependencies can be changed, thus enhancing the security of its contents. Illustratively, a cassette is formed from multiple classes or class files. When the cassette is assembled and deemed to be dependent upon another cassette, a notation is made to this effect in a manifest that accompanies the cassette.

When a cassette (e.g., a class within the cassette) makes a first reference to another class, the JVM first determines whether the class has already been loaded. If so, the class is accessed normally. If, however, the JVM has no reference to the class, then the JVM instructs the class loader of the cassette from which the reference was made to load the class. Before searching its cassette, however, the dependency graph is traversed to determine whether any of the depending cassettes contain the class. Therefore, the class loaders associated with the depending cassettes, starting with the most remote, search their cassettes.

If the referenced class is found within a dependent cassette, it is loaded by the class loader associated with the cassette in which the class was found. Finally, and only if the referenced class cannot be found in a depending cassette, the dependent cassette is searched. If the referenced class is found in a depending cassette but is marked with "private" protection, standard Java class security applies and the dependent cassette cannot access the class and therefore it will not be loaded. In an alternative embodiment of the invention, classes with "package" protection are also inaccessible outside of their own cassettes. In yet a further alternative embodiment of the invention, classes with "protected" protection are accessible across cassette and namespace boundaries.

The dependent relationship described above is, in a present embodiment of the invention, associated or stored with individual cassettes. In an alternative embodiment, however, cassette inter-dependencies are expressed in association with JAR (Java ARchive) files. Cassettes are transported via JAR files in this alternative embodiment, and each JAR file can contain only one cassette. Thus, a cassette inter-dependency may, for purposes of the present invention, be expressed as a JAR file inter-dependency.

JAR files are illustratively used to transport Java applications or applets (e.g., small Java applications), or components of a Java application. For example, by combining a Java applet or application with its required class files, image files, audio files, etc. into a JAR file, the applet can be transported across a public network such as the Internet. This is helpful when a web browser needs to download the applet from a web server, for example, because the entire applet can be downloaded in a single HTTP (Hyper Text Transport Protocol) transaction. JAR files may also be used, as their name implies, for archival purposes.

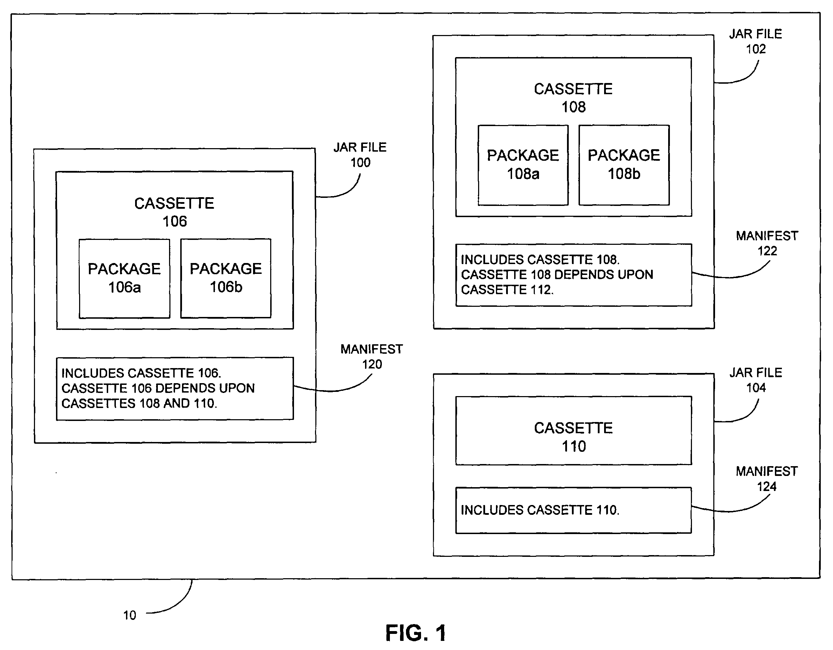

FIG. 1 depicts an illustrative program environment, such as a program development environment, in which an embodiment of the invention is utilized. The program environment of FIG. 1 illustratively resides on a general purpose computer or a special purpose device such a hand-held computer. Details of such devices (e.g., processor, memory and data storage) are well known and are omitted for the sake of clarity.

The illustrated environment includes JAR files 100, 102, 104. JAR files 100, 102, 104 contain cassettes 106, 108, 110, respectively. In the presently described embodiment, a cassette is a collection of classes having a common functionality. Each cassette offers one or more services (e.g., printing services, credit card protocols, tax services) to application programs and/or other cassettes. Cassettes therefore differ from typical complete Java applications in that a Java application is generally independent from other program code whereas a cassette (even cassettes within one application) often depends on another cassette to share its code (such as classes) and provide necessary services and functions. A cassette may, however, comprise a complete application.

In the illustrated embodiment, cassette 106 includes Java packages 106a, 106b and cassette 108 includes Java packages 108a, 108b. A Java package is a collection of related classes used within a cassette or Java application.

JAR files 100, 102, 104 also contain manifests 120, 122, 124. A JAR file's manifest identifies a cassette and any other files or objects included within the JAR file, plus any dependencies maintained by the included cassette. For example, manifest 120 discloses that cassette 106 depends upon cassettes 108 and 110. In addition, cassette 108 depends upon cassette 112 (not depicted in FIG. 1); cassette 110, however, has no dependencies. Thus, in the illustrated embodiment full use of cassette 106 requires cassettes 108 and 110 to be available within the program environment.

Manifests are illustratively constructed as text files. In a present embodiment of the invention each manifest maintains a "dependencies" section, or header, in order to identify dependencies from the cassette that is stored in the JAR file with the manifest. Within this section, or following this header, are the file names (e.g., including path) of each cassette that depends directly from the cassette. Alternatively, instead of a file name a depending cassette is identified by an interface that is implemented by the depending cassette. In addition, if a depending cassette is not stored locally with the dependent cassette, in a present embodiment a Uniform Resource Locator (URL) is included in the manifest to identify a location from which the depending cassette may be obtained.

FIG. 1 thus depicts an exemplary program environment (e.g., a program's run-time or development environment) wherein the contents of the various JAR files are used within a Java applet or application. In accordance with an embodiment of the invention, classes within cassette 106 may access objects and classes included in cassettes 108, 110 and 112 (cassette 112 is accessible because of the dependency from cassette 108). Access to dependent cassettes is granted even though each depending cassette in the environment is loaded by a different class loader operating in a separate namespace. Illustratively, however, classes within a depending cassette (e.g., a class within package 108a) may be protected from access by classes in cassette 106 by granting the class "private" protection in accordance with standard Java class construction).

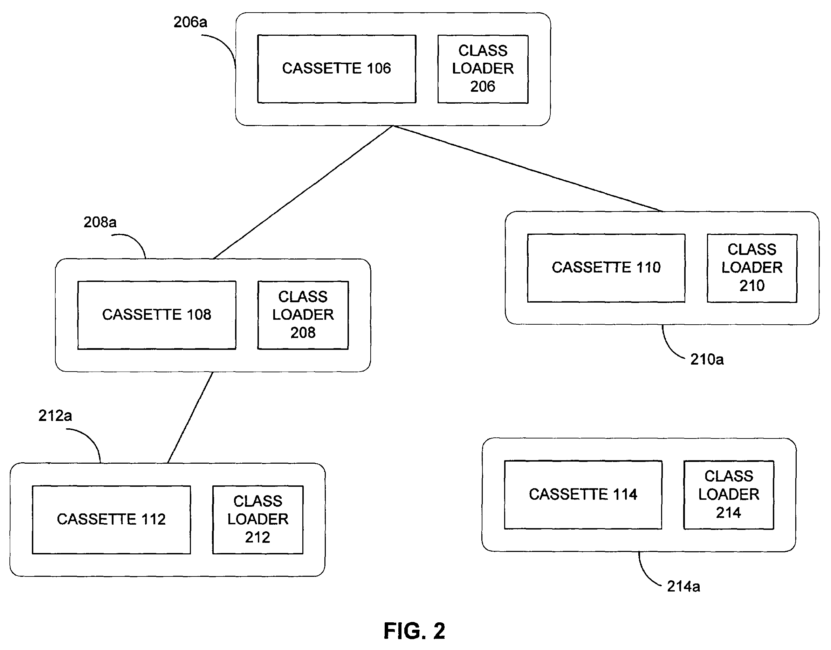

With reference now to FIG. 2, an illustrative dependency graph is depicted. For purposes of the present embodiment, dependency graphs are stored in machine-readable format within a program environment. Class loaders 206, 208, 210, 212 and 214 are depicted for loading cassettes 106, 108, 110, 112 and 114, respectively. Each class loader is illustratively an instance of the same class loader class (e.g., the abstract class loader class or a sub-class of the system class loader), but each class loader loads classes into a separate namespace. In FIG. 2, namespaces 206a, 208a, 210a, 212a and 214a are associated with the respective class loaders.

In a present embodiment of the invention, when a class or object in cassette 106 makes a first reference to another class or object, it is able to access that class or object from within any of cassettes 106, 108, 110 or 112. In other words, by establishing dependent relationships among cassettes, program code executing from one cassette is able to reach across namespace boundaries without explicit authorization from the program's source code. Namespace 214a, however, cannot be automatically penetrated in order to access classes within cassette 114, because the dependencies of cassette 106 do not extend to cassette 114.

From manifest 120, a dependency graph or list (e.g., as depicted in FIG. 2) is constructed in order to search for classes among a cassette's dependencies. When program code executing from cassette 106 references a class, the referenced class is searched for in a particular order. In the presently illustrated embodiment, it is first searched for within a system cache maintained by the JVM. If it is not within the cache, then the class has not been loaded before and it must therefore be located before it can be loaded. The default Java classes (i.e., those provided with the Java API) are searched first. If not found in the default classes, it is searched for among the program's cassettes or packages in accordance with a recursive procedure that traverses the dependent cassette's dependency graph.

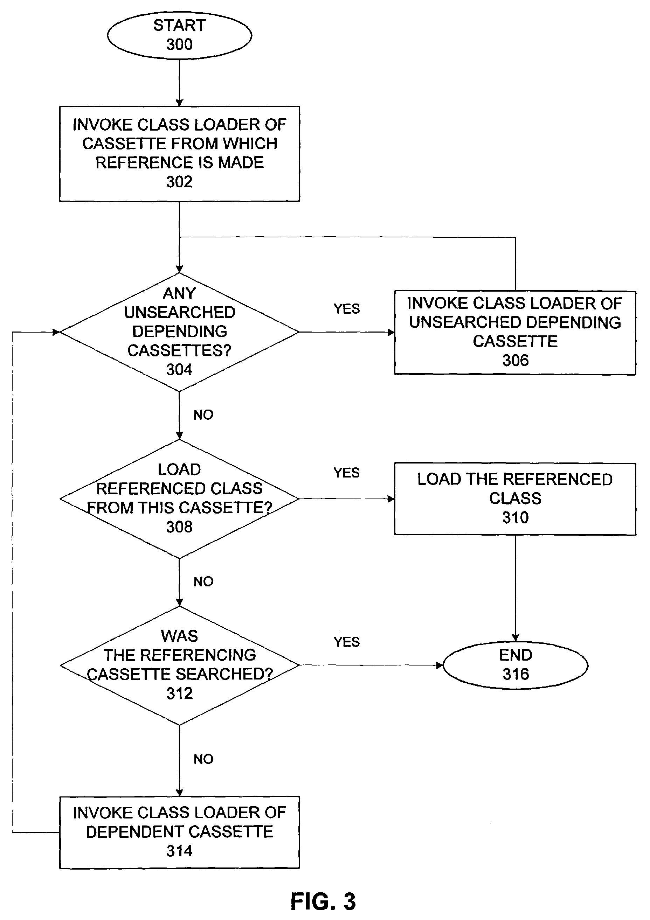

FIG. 3 depicts a recursive procedure for finding and loading a referenced class from within the cassettes in the dependency graph associated with the referencing cassette. State 300 is a start state. In state 302 the class loader of the referencing cassette is invoked and requested to load the referenced class. In state 304 the referencing cassette identifies (e.g., with reference to its dependency graph) the cassettes, if any, it depends upon. Because of the recursive nature of the illustrated procedure and because a cassette may depend upon more than one other cassette, the class loader also determines whether any of the depending cassettes have already been searched for the referenced class. Cassettes are searched later in the procedure, as described below.

In state 306 the class loader of a depending cassette that has not been searched is invoked and requested to load the referenced class (i.e., the procedure moves down a level in the dependency graph). Until reaching a depending cassette having no further dependencies, states 304 and 306 are repeated.

Then, in state 308, the class loader of the depending cassette attempts to load the referenced class from within the cassette. If, for example, the class is found in the cassette and is not protected "private," it is loaded in state 310, after which the procedure exits in state 316.

If the referenced class could not be loaded in state 308, the procedure determines in state 312 whether it just attempted to load the class from the referencing cassette. Because the referencing cassette is searched last in the presently described embodiment and therefore marks the end of the search process, the procedure ends in state 316 after the referencing cassette is searched.

If the referencing cassette has not been searched yet, in state 314 the procedure invokes the class loader of a cassette from which the just-searched cassette depends (i.e., the procedure moves up a level in the dependency graph). The procedure then repeats states 304, 306, 308, 312 and 314 as necessary until either the referenced class is found and loaded or the referencing cassette is searched.

One skilled in the art will recognize the need for the recursive nature of the illustrated procedure. The illustrated procedure allows cassettes to be searched in the reverse order of their dependencies and also allows one cassette to have multiple direct dependencies (e.g., cassette 106 in FIG. 2 directly depends upon cassettes 108, 110).

Thus, according to the dependency graph depicted in FIG. 2 the class loader associated with cassette 106 determines whether cassette 106 is dependent upon any others. If so, a depending cassette's class loader is called upon to attempt to find and load the class before the dependent cassette's class loader looks in the dependent cassette. Thus, the procedure follows the graph downward until it encounters a depending cassette having no dependencies (e.g., cassette 112). Once class loader 212 determines that cassette 112 has no depending cassettes, it attempts to load the referenced class from cassette 112. If successful, the class is loaded by class loader 212 and the program continues.

If however, the referenced class is not found in cassette 112, the search process continues by traversing the dependency graph upward and attempting to load the class from within each successive cassette. Only if the class is not found in the cache, default classes or in any of cassettes 112, 110, and 108 is cassette 106 searched.

Java security mechanisms for classes remain effective in the illustrated embodiment. For example, a class within package 108a of cassette 108 may be protected "private" (in accordance with Java class construction syntax), in which case classes in cassette 106 are not able to access the class. Private protection means that the class is only accessible to other classes within package 108a regardless of the dependent relationship between cassettes 106, 108. In addition, because cassette 114 is not within the chain of dependencies of cassette 106, its classes are not automatically searched when a class within cassette 106 references a class for the first time.

As a result of applying the presently described embodiment of the invention, the danger of "package eclipsing" is reduced or eliminated. Package eclipsing is a danger when two class loaders' namespaces are merged or one class loader is otherwise granted unfettered access to another's namespace. In such an event, two packages that have identical names and which previously existed in separate namespaces may come into logical proximity to one another. As a result, classes within one of these packages become accessible to classes in the other's namespace. In particular, classes that were assigned "private" protection within one of the identically-named packages (and which were thus only accessible to classes within that package) are now accessible to classes in the other package - thus creating a potentially serious vulnerability.

In the described embodiment, however, each class loader tracks the packages within its cassette(s). Illustratively, each class loader stores a list or table of all packages in its cassette(s). When one cassette maintains a dependent relationship with another cassette (thus "merging" their namespaces), and the other cassette contains a package with the same name as a package in the first cassette, the class loader associated with the first cassette prevents package eclipsing by only accessing the package within its cassette. It will not access the second cassette's package of the same name.

The foregoing descriptions of embodiments of the invention have been presented for purposes of illustration and description only. They are not intended to be exhaustive or to limit the invention to the forms disclosed. Many modifications and variations will be apparent to practitioners skilled in the art. Accordingly, the above disclosure is not intended to limit the invention.

## Claims

1. A method of accessing a class within a cassette, or collection of classes having a common functionality, across a namespace boundary, comprising:
associating a first cassette (**108**) with a first class loader (**208**) and a first namespace (**208a**);
associating a second cassette (**106**) with a second class loader (**206**) and a second namespace (**206a**), the second cassette (**106**) having a dependency upon said first cassette (**206**);
constructing (**304**) a dependency graph to include all cassettes (**108, 110, 112**) depending from said second cassette (**106**);
in response to a first reference to a specified class, said reference being from within said second cassette (**106)**, attempting (**308**) to load (**310**) said referenced class from said first cassette (**108**); and
attempting to load (**314**) said referenced class from said second cassette (**106**) if said referenced class is not loaded from said first cassette (**108**).

2. The method of claim 1, wherein said first cassette (**108**) is dependent upon a third cassette (**112**), further comprising attempting to load said referenced class from said third cassette (**112**) before attempting to load said referenced class from said first cassette (**108**).

3. The method of claim 1 or claim 2, further comprising:
opening a container file (**100**); and
retrieving said second cassette (**106**) from said container file.

4. The method of any one of claims 1 to 3 , wherein opening a container file (**100**) comprises receiving said container file (**100**) across a network.

5. The method of any one of claims 1 to 4, further comprising receiving a manifest (**120**) associated with said second cassette (**106**).

6. The method of claim 5, further comprising retrieving said first cassette (**108**) from a location identified in said manifest (**120**).

7. A computer system executing a program comprising multiple collections of classes (**106a, 106b, 108a, 108b**), each collection of classes being associated with a different class loader (**206, 208**), comprising:
a processor for executing the program;
a first class loader (**208**) for loading classes from a first collection of classes (**108a, 108b**);
a second class loader(**206**) for loading classes from a second collection of classes (**106a, 106b**), said second collection of classes having a dependency upon said first collection of classes;
a dependency memory for storing said dependency of said second collection of classes;
wherein the first collection of classes (**108a, 108b**) is searched for a class referenced by a class within said second collection of classes (**106a, 106b**) before said second collection of classes (**106a, 106b**) is searched for said referenced class.

8. The computer system of claim 7, further comprising a manifest (**120**) for identifying said dependency of said second collection of classes (**106a, 106b**).

9. A method of operating a computing device, comprising:
creating a first set of classes (**108**);
creating a second set of classes (**106**);
establishing a dependent relationship from said second set of classes (**106**) upon said first set of classes (**108**);
storing said dependent relationship;
associating said first set of classes with a first class loader (**208**);
associating said second set of classes with a second class loader (**206**);
receiving a first reference to a specified class, said reference being from a class within said second set of classes (**106**);
attempting (**308**) to load (**310**) said specified class from said first set of classes (**108**) in accordance with said dependent relationship; and
attempting to load (**31**4) said specified class (**106, 106b**) from said second set of classes (**106**) if said specified class is not loaded from said first set of classes (**108**).

10. A computer readable storage medium storing instructions that, when executed by a computer, cause the computer to perform a method for accessing a program object, the method comprising:
associating a first cassette (**108**) with a first class loader (**208**) and a first namespace (**208a**);
associating a second cassette (**106**) with a second class loader (**206**) and a second namespace (**206a**), the second cassette having a dependency upon said first cassette;
constructing a dependency graph to include all cassettes depending from said second cassette;
in response to a first reference to a specified class, said reference being from said second cassette (**106**), locating the most remote cassette (**108**) in said dependency graph;
attempting (**308**) to load (**310**) said referenced class from said remote cassette; and
attempting to load (**314**) said referenced class from the next least remote cassette depending from said second cassette.

11. A program executing apparatus, comprising:
a first loader means (**208**) for loading a class from a first set of classes (**108**);
a second loader means (**206**) for loading a class from a second set of classes (**106**);
a manifest means (**120**) for identifying a dependency from said second set of classes (**106**) upon said first set of classes (**108**); and
a memory means for storing said dependency from said second set of classes;
wherein said first loader means (**208**) attempts to load a specified class from said first set of classes (**108**) in response to a reference to said specified class from said second set of classes (**106**).

12. A data structure contained in a computer readable storage medium containing a data structure for allowing access between collections of program instructions, the data structure comprising:
a container file (**100**), said container file (**100**) including a manifest (**120**) and a first collection of program instructions, said manifest (**120**) specifying a dependency of said first set of program classes (**106a, 106b**) upon a second set of program classes (**108a, 108b)**.

13. The data structure of claim 12, wherein said manifest comprises a text file.

14. A computer program encoding a set of computer instructions for accessing a class within a cassette, or collection of classes having a common functionality, across a namespace boundary, which when running on a computer is adapted to perform the method as claimed in any one of claims 1 to 6, or claim 9.
